# NEUE EUROPÄISCHE PATENTSCHRIFT

(11) **EP 3 368 787 B2**
(45) Veröffentlichungstag und Bekanntmachung des Hinweises auf die Entscheidung über den Einspruch: **22.04.2026**
(45) Hinweis auf die Patenterteilung: 13.09.2023
(21) Anmeldenummer: 16795221.7
(22) Anmeldetag: 17.10.2016
(51) Int. Cl.: F16D 55/226, F16D 55/2265, F16D 65/092, F16D 65/097

(54) **SCHEIBENBREMSE, SOWIE BLATTFEDER UND BEFESTIGUNGSBÜGEL EINER NIEDERHALTERANORDNUNG FÜR DIE BREMSBELÄGE EINER SCHEIBENBREMSE**
DISC BRAKE, AND LEAF SPRING AND MOUNTING BRACKET OF A DISC BRAKE PAD PRESS-UP ASSEMBLY
FREIN À DISQUE ET RESSORT À LAMES ET SUPPORT DE MONTAGE D'UN ENSEMBLE DE PRESSION DES PLAQUETTES DE FREIN À DISQUE

(30) Priorität: 27.10.2015 DE 102015118291
(43) Veröffentlichungstag der Anmeldung: 05.09.2018
(73) Patentinhaber: BPW Bergische Achsen KG, 51674 Wiehl (DE)
(72) Erfinder: GOYKE, Georg, 51588 Nümbrecht (DE); KÖSTER, Fabian, 51702 Bergneustadt (DE)
(74) Vertreter: DREISS Patentanwälte PartG mbB
(86) Internationale Anmeldenummer: PCT/DE2016/100483
(87) Internationale Veröffentlichungsnummer: WO 2017/071681

(56) Entgegenhaltungen:
- EP-A1- 1 898 115
- EP-B1- 1 069 334
- DE-A1- 102005 049 057
- DE-A1- 102012 106 424
- DE-A1- 102013 011 655
- DE-A1- 102013 011 671
- DE-A1- 102013 011 672

## Beschreibung

Die Erfindung betrifft eine Scheibenbremse mit einem eine Bremsscheibe sowie Bremsbeläge zu beiden Seiten der Bremsscheibe übergreifenden Bremssattel, einem die Bremsbeläge gegen ein Herausfallen aus der Scheibenbremse sichernden Belagniederhalter, der sich, gegen die Belagrückenplatten beider Bremsbeläge anliegend, quer zu diesen erstreckt, und mit einer Blattfeder, die federelastisch gegen die den Bremsbelägen abgewandte Seite des Belagniederhalters anliegt, sich in dessen Längsrichtung erstreckt, und mit ihren beiden Federenden in Federwiderlagern abgestützt ist, wobei Bestandteil eines der Federwiderlager ein Befestigungsmittel ist, welches sich quer zu dem Belagniederhalter und der Blattfeder erstreckt.

Die Erfindung betrifft ferner eine Blattfeder einer Niederhalteranordnung für die Bremsbeläge einer Scheibenbremse, mit einem auf einem Mittelabschnitt der Blattfeder angeordneten Anlageort in Gestalt einer Biegung oder Krümmung der Blattfeder mit Krümmungsaußenseite zu den Bremsbelägen hin.

Die Erfindung betrifft ferner einen Bügel und insbesondere einen Befestigungsbügel für eine einen Belagniederhalter und eine Blattfeder umfassende Niederhalteranordnung.

Bei Scheibenbremsen mit einem die Bremsbeläge in Belagschächten aufnehmenden Bremssattel sind Maßnahmen erforderlich, um die Bremsbeläge gegen ein Herausfallen aus den Belagschächten zu sichern. Zu diesem Zweck wird häufig, so z. B. in der EP 1 069 334 B1, der EP 2 057 384 B1, der DE 10 2005 044 091 A1, der DE 10 2005 045 877 B3, der DE 20 2008 013 446 U1, der DE 10 2015 000 857 A1 oder der DE 10 2013 011 671 A1 der Belagschacht durch einen stabilen Haltebügel überbrückt, der sich quer zu den Bremsbelägen erstreckt und mit seinen Enden an dem Bremssattel befestigt ist. Zwischen dem Haltebügel und jedem Bremsbelag ist eine Blattfeder angeordnet, die sich mit ihren Federenden gegen die Belagrückenplatte des jeweiligen Bremsbelags, und im Bereich ihrer Federmitte von unten gegen den Haltebügel abstützt. Auf diese Weise kommt es zu einer dauernden, zu der Drehachse der Bremsscheibe gerichteten Niederhaltekraft auf die Bremsbeläge.

Da bei den vorgenannten Scheibenbremsen die an den Bremsbelägen abgestützten Federn der Hitze der Bremsbeläge und der Bremsscheibe ausgesetzt sind, sind aus der EP 2 687 746 B1 und der EP 1 898 115 B1 technische Lösungen bekannt, bei denen sich zwischen dem quer über den Belagschacht führenden Haltebügel und den Bremsbelägen keine Federelemente befinden. Stattdessen ist eine einzige Blattfeder auf der Außenseite des starren Haltebügels angeordnet und beaufschlagt diesen mit einer zu den Bremsbelägen gerichteten Federkraft. Der Haltebügel selbst ist also der Belagniederhalter, wozu er unmittelbar gegen den oberen Rand der Rückenplatten der Bremsbeläge anliegt. Die Blattfeder ist im Bereich ihrer Federmitte gegen die den Bremsbelägen abgewandte Oberseite des Belagniederhalters abgestützt, während ihre beiden Federenden in Federwiderlagern an dem Bremssattel festgelegt sind. Bestandteil des einen Federwiderlagers ist ein Befestigungsmittel in Gestalt eines Bolzens, welcher sich quer zu dem Belagniederhalter und der Blattfeder erstreckt. Der Bolzen dient zugleich der Verriegelung des Belagniederhalters und der Verriegelung der Blattfeder. Diese doppelte Verriegelungsfunktion durch Einsetzen des Bolzens führt zu Nachteilen bei der Montage der Niederhalteranordnung, etwa nach einem Auswechseln der Bremsbeläge wegen Verschleißes.

Der Erfindung liegt die **Aufgabe** zugrunde, durch technische Maßnahmen die Montage der Niederhalteranordnung, z. B. nach dem Auswechseln der Bremsbeläge, zu verbessern und zu vereinfachen.

Zur **Lösung** dieser Aufgabe bei einer Scheibenbremse der eingangs genannten Art wird vorgeschlagen, dass weiterer Bestandteil des Federwiderlagers ein Bügel ist, der durch das Befestigungsmittel mit dem Bremssattel verbunden ist, und gegen dessen dem Befestigungsmittel zugewandte Innenseite das Federende anliegt.

Der Bügel stellt zwar ein zusätzliches Bauteil innerhalb der Niederhalteranordnung dar, jedoch verbessert und vereinfacht er die Montage der Funktionseinheit aus Belagniederhalter und Blattfeder, und zwar gerade im Hinblick auf die montagetechnisch ungünstige Vorspannung, unter der die Blattfeder schon während der Montage steht. Mit der Erfindung lässt sich das Befestigungsmittel, vorzugsweise ein Bolzen, trotz der Vorspannung, unter der die Blattfeder steht, relativ einfach und gefahrlos an dem Bremssattel einsetzen, womit dann zugleich der Belagniederhalter und die Blattfeder ihre vorgesehene Position einnehmen.

Zur Lösung der genannten Aufgabe trägt auch die Ausgestaltung der Blattfeder bei, wenn diese an ihrem einen Federende mit einem sich im Wesentlichen quer zur Haupterstreckung der Blattfeder erstreckenden Formschlusselement versehen ist. Durch das Formschlusselement wird eine Lagesicherung der Blattfeder im Bereich des den Bolzen aufweisenden Federwiderlagers erzielt.

Vorzugsweise ist die Blattfeder an dem Federende mit einer Biegung versehen ist, deren Biegungsaußenseite sich auf derselben Hauptseite der Blattfeder befindet, wie die Krümmungsaußenseite an dem Anlageort.

Vorzugsweise ist die Blattfeder auch an ihrem anderen Federende mit einem sich im Wesentlichen quer zur Haupterstreckung der Blattfeder erstreckenden Formschlusselement versehen, wobei sich die beiden Formschlusselemente bezüglich der beiden Hauptseiten der Blattfeder in entgegengesetzte Richtungen erstrecken.

Durch das Formschlusselement an dem anderen Federende der Blattfeder kann die Blattfeder den Belagniederhalter hintergreifen. Dadurch kommt es an diesem anderen Federende zu einer Längskoppelung dieses Federendes mit dem Belagniederhalter. Zur Ausbildung des zweiten Formschlusselements kann die Blattfeder mit einer gegenüber der übrigen Blattfederbreite reduzierten Verjüngung versehen sein.

Mit einer weiteren Ausgestaltung wird vorgeschlagen, dass die Blattfeder nur an einem einzigen Ort ihrer Längserstreckung federelastisch gegen den Belagniederhalter anliegt, wobei die Blattfeder an diesem Ort eine Krümmung z. B. in Gestalt eines Knicks aufweist und mit ihrer Krümmungsaußenseite gegen den Belagniederhalter anliegt.

Gemäß einer weiteren Ausgestaltung weist der Belagniederhalter im Bereich des Federwiderlagers zwei durch einen offenen Mittelbereich voneinander getrennte Längsabschnitte auf, deren Innenseiten einander und einem Lagerbock zugewandt sind, welcher an dem Bremssattel angeformt ist und an welchem das Befestigungsmittel lösbar befestigt ist. In diesem Fall ist es von Vorteil, wenn der Bügel gegen die einander abgewandten Außenseiten der Längsabschnitte in Bolzenlängsrichtung abgestützt ist.

Zur Lösung der genannten Aufgabe trägt auch die Ausgestaltung des Bügels bzw. Befestigungsbügels zur Verwendung in der Scheibenbremse bei. Dieser setzt sich einstückig zusammen aus einem Mittelabschnitt und gegenüber dem Mittelabschnitt angewinkelten Seitenabschnitten, wobei die Seitenabschnitte zueinander fluchtende Öffnungen zum Hindurchführen des vorzugsweise als Bolzen ausgebildeten Befestigungsmittels aufweisen.

Vorzugsweise weist der Mittelabschnitt eine Öffnung in Form eines Schlitzes mit Erstreckung zu den Seitenabschnitten hin auf.

Ein Ausführungsbeispiel einer Scheibenbremse mit Niederhalteranordnung wird im Folgenden anhand der Zeichnungen näher erläutert. Darin zeigen:
- Fig. 1: eine perspektivische Draufsicht auf den zentralen Teil des Bremssattels einer Fahrzeug-Scheibenbremse einschließlich des im Bremssattel ausgebildeten Belagschachts, in dem beidseits der Bremsscheibe Bremsbeläge angeordnet sind;
- Fig. 2: die Gegenstände nach Fig. 1 in einer anderen perspektivischen Draufsicht;
- Fig. 3: einen Querschnitt durch eine Niederhalteranordnung bestehend aus einem Belagniederhalter, einer Blattfeder, einem Bügel sowie einem an dem Bremssattel befestigten Bolzen;
- Fig. 4: eine perspektivische Darstellung des Bügels;
- Fig. 5a: eine Seitenansicht nur des Belagniederhalters;
- Fig. 5b: eine Draufsicht auf den Belagniederhalter.

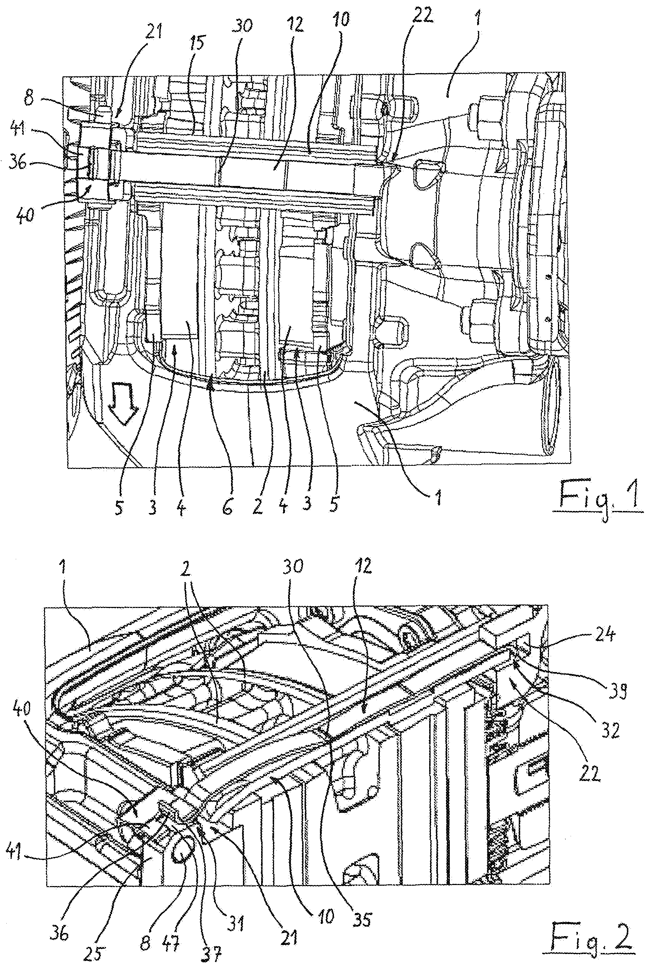

Die Fig. 1 zeigt den zentralen Teil des Bremssattels 1 einer Fahrzeug-Scheibenbremse für Nutzfahrzeuge. Die Scheibenbremse kann vom Gleitsattel-Bautyp oder vom Festsattel-Bautyp sein. Zu jeder Seite der Bremsscheibe 2 ist jeweils ein Bremsbelag 3 angeordnet. Zur Aufnahme der Bremsbeläge 3 ist der Bremssattel 1 mit einem Belagschacht 6 versehen, über den sich ein Belagniederhalter 10 erstreckt. Der Belagniederhalter 10 überbrückt den Belagschacht 6 in der Weise, dass sich der Belagniederhalter 10 quer zu den Bremsbelägen 6 erstreckt.

Die Bremsbeläge 3 bestehen wie üblich aus dem eigentlichen Reibbelag 4 sowie einer Belagrückenplatte 5, welche die Führung und Abstützung der Bremsbeläge 3 an dem Bremssattel oder an einem achsfesten Bremsträger übernehmen.

Der länglich gestaltete Belagniederhalter 10 erstreckt sich parallel zu der Drehachse der Bremsscheibe 2. Seine beiden Enden sind unmittelbar oder mittelbar an dem Bremssattel 1 befestigbar. Zu diesem Zweck ragt das eine Ende des Belagniederhalters 10 unter eine Ausnehmung 7 des Bremssattels 1, und ist so unmittelbar an dem Bremssattel 1 befestigt. Das andere Ende des Belagniederhalters 10 ist mittels eines Befestigungsmittels 8, hier eines zylindrischen Bolzens, lösbar an dem Bremssattel 1 befestigt.

Zur Sicherung der zwei Bremsbeläge 3 in dem Belagschacht 6 ist der Belagniederhalter 10 als ein im Wesentlichen starrer Haltebügel ausgebildet und mit einer biegeelastischen Blattfeder 12 zu einer Niederhalteranordnung kombiniert.

Der starre Belagniederhalter 10 weist einen Querschnitt mit einer den Bremsbelägen 3 zugewandten Unterseite auf, an die sich zu beiden Längsrändern hin Schrägen 15 anschließen, wodurch der Belagniederhalter 10 im Bereich seiner Unterseite einen insgesamt trapezförmigen Querschnitt aufweist. Ausschließlich mit den Schrägen 15 stützt sich der Belagniederhalter 10 an entsprechend angeschrägten Konturen ab, mit welchen die Belagrückenplatten 5 an ihren oberen Rändern versehen sind.

Auf diese Weise fixiert der Belagniederhalter 10 die Bremsbeläge 3 in dem Belagschacht 6, so dass die Bremsbeläge 3 nicht nach radial außen, bezogen auf die Drehachse der Bremsscheibe, aus dem Belagschacht 6 heraustreten oder herausfallen können. Die schräge Anordnung der Anlageflächen führt außerdem auch zu einer gewissen seitlichen Lagesicherung der beiden Bremsbeläge.

Auch den Bremsbelägen 3 abgewandt weist der Belagniederhalter 10 einen Querschnitt ähnlich einer trapezförmigen Rinne auf. An einen flachen Boden dieser Rinne, welcher in etwa die Breite B der Blattfeder 12 aufweist, schließen sich zu beiden Seiten Schrägen an.

Die aus einem Federstahl bestehende Blattfeder 12 ist mit ihrem einen Federende 31 in einem ersten Federwiderlager 21, und mit ihrem anderen Federende 32 in einem zweiten Federwiderlager 22 befestigt, wobei diese Befestigung jeweils lösbar ist, um die Blattfeder 12 und den darunter angeordneten Belagniederhalter 10 zu entfernen, und so zum Austausch der Bremsbeläge an den Belagschacht 6 zu gelangen.

Die Blattfeder erstreckt sich außen längs und parallel zu dem Belagniederhalter 10 und ist gegen diesen abgestützt, wodurch der Belagniederhalter 10 zu den Bremsbelägen 3 hin federbelastet ist. Auf diese Weise stützt sich der Belagniederhalter, obwohl selbst starr, unter dauernder Federkraft direkt am äußeren Rand der Belagrückenplatte 5 der beiden Bremsbeläge 3 ab.

Die Blattfeder 12 stützt sich nicht auf Ihrer ganzen Länge, sondern nur auf einem sehr kurzen Anlageort 35 an dem Belagniederhalter 10 ab. Zur Erzielung dieses Anlageorts 35, der sich auf einem Mittelabschnitt der Blattfeder 12 befindet, ist die Blattfeder mit einer Biegung bzw. Krümmung 30 versehen. Die Krümmung ist hier eine einem Knick vergleichbare Biegung um eine Biegelinie, die sich quer zur Längserstreckung der Blattfeder erstreckt. Mit der Außenseite dieser Biegung bzw. Krümmung 30 liegt die Blattfeder 12 unmittelbar am Boden der Rinne des Belagniederhalters 10 an. Nur am Ort dieser diskreten Anlage bzw. Abstützung wird daher der Belagniederhalter 10 mit der Federkraft in Richtung auf die Bremsbeläge 3 beaufschlagt.

Bei dem hier beschriebenen Ausführungsbeispiel befindet sich das erste Federwiderlager 21 fahrzeugaußen, und das zweite Federwiderlager 22 fahrzeuginnen an dem Bremssattel 1. Nur das erste Federwiderlager 21 ist für die Verriegelung des Belagniederhalters 10 und der Blattfeder 12 mit dem Bolzen 8 versehen. Hingegen ist der Bremssattel 1 zur Bildung des zweiten Federwiderlagers 22 mit einer zu dem Belagschacht 6 hin offenen Öffnung oder Ausnehmung 24 versehen, die Platz zugleich für das dortige Ende des Belagniederhalters 10 wie auch für das dortige Federende 32 bietet.

Für die Montage der Anordnung aus Belagniederhalter und Blattfeder ist es von Vorteil, dass die gemeinsam in die Öffnung bzw. Ausnehmung 24 des Bremssattels eingesetzten Enden dieser beiden Bauteile in Längsrichtung zueinander verriegelt sind. Hierzu ist der Belagniederhalter 10 an diesem Ende 20 mit einer Stirnfläche 23 versehen, hinter die ein an dem entsprechenden Federende 32 der Blattfeder ausgebildetes Formschlusselement 39 greift (Fig. 2). Für dieses Hintergreifen ist die Blattfeder 12 an dem Federende 32 im Wesentlichen quer abgewinkelt, wobei diese Abwinklung, innerhalb der Öffnung bzw. Ausnehmung 24, hinter die Stirnfläche 23 des Belagniederhalters 10 greift. Die so erzielte Verriegelung hat zur Folge dass, sobald sich der Belagniederhalter 10 in der Öffnung bzw. Ausnehmung 24 des Bremssattels befindet, die Blattfeder 12 in Längsrichtung verriegelt, nämlich an dem Belagniederhalter 10 gefangen ist. Diese Maßnahme erleichtert das anschließende Festlegen des Belagniederhalters 10 und vor allem der Blattfeder 12 am anderen Ende, also im Bereich des ersten Federwiderlagers 21.

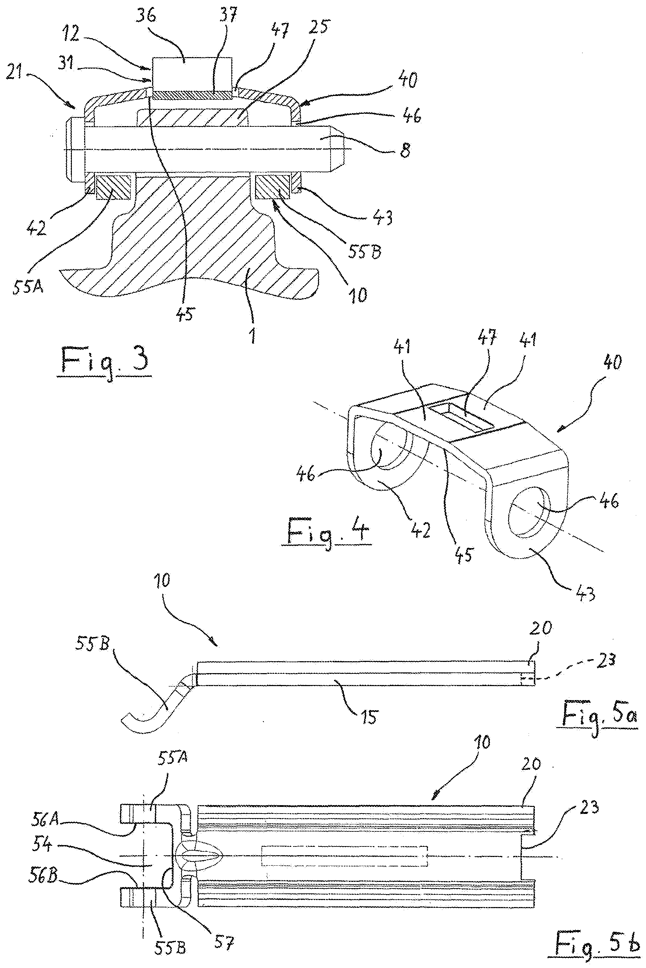

Im Bereich des ersten Federwiderlagers 21 ist der Belagniederhalter 10, wie Fig. 5a erkennen lässt, gekröpft ausgebildet, indem er an diesem Ende eine Biegung aufweist. Bei montiertem Bolzen 8 untergreift diese Biegung den Bolzen 8, so dass dieses Ende des Belagniederhalters durch den Bolzen gefangen ist und sich selbst dann nicht nach außen hin von dem Bremssattel 1 lösen kann, falls die Blattfeder 12 fehlt, oder sie versagt.

Außerdem ist eine Längsverriegelung des Belagniederhalters 10 realisiert, indem sich dessen gebogener Endabschnitt aus zwei durch einen offenen Mittelbereich 54 voneinander getrennten Längsabschnitten 55A, 55B zusammensetzt. Der die beiden Längsabschnitte 55A, 55B verbindende Querrand 57 liegt in montiertem Zustand einem Lagerbock 25 gegenüber, der an dem Bremssattel 1 fest angeformt ist und vor allem dazu dient, den Bolzen 8 und damit das Befestigungsmittel aufzunehmen. Die Längsbeweglichkeit des Belagniederhalters 10 ist daher in beide Richtungen begrenzt, und zwar einerseits durch Anstoßen des Querrands 57 gegen den Lagerbock 25, und andererseits durch Anstoßen des anderen Endes des Belagniederhalters 10 in der Öffnung bzw. Ausnehmung 24 des Bremssattels.

Der an dem Bremssattel 1 einstückig angeformte Lagerbock 25 weist eine Bohrung zur Hindurchführung des Bolzens 8 auf. Die Längsabschnitte 55A, 55B des Belagniederhalters 10 sind mit ihren einander zugewandten Innenseiten 56A, 56B dem Lagerbock 25 in Bolzenlängsrichtung zugewandt, wobei die Innenseite 56A des einen Längsabschnitts 55A von der einen, und die Innenseite 56B des anderen Längsabschnitts 55B von der anderen Seite her dem Lagerbock 25 zugewandt ist. Allerdings ist eine gewisse Beweglichkeit des Belagniederhalters 10 relativ zu dem Lagerbock in Umfangsrichtung, also in Drehrichtung der Bremsscheibe, wichtig.

Gemäß Fig. 3 weisen die gebogenen Längsabschnitte 55A, 55B des Belagniederhalters 10 im montierten Zustand einen gewissen Abstand zu dem zylindrischen Bolzen 8 auf. Auch mit ihrer dem Bolzen 8 abgewandten Unterseite weisen sie einen Abstand zu der gegenüberliegenden Fläche 27 des Bremssattels 1 auf. Dies liegt daran, dass sich der Belagniederhalter 10, gerade wegen seiner Niederhalter-Funktion, vor allem auf den beiden Bremsbelägen 3 abstützt.

Fig. 3 lässt auch die Arretierung des Federendes 31 an dem Federwiderlager 21 erkennen. Bestandteil dieses Federwiderlagers 21 ist außer dem Bolzen 8 ein Befestigungsbügel 40, der durch den Bolzen 8 mit dem Lagerbock 25 des Bremssattels verbunden ist. Gegen die dem Bolzen 8 zugewandte Innenseite 45 des Bügels 40 liegt die Blattfeder 12 mit ihrem Federende 31 an.

Als eine zusätzliche Sicherungsmaßnahme greift ein ganz am Ende des Federendes 31 ausgebildetes Formschlusselement 36 in eine schlitzförmige Öffnung 47 in dem Bügel 40 ein.

Gemäß Fig. 4 setzt sich der Bügel 40 aus einem Mittelabschnitt 41, gegen dessen Innenseite das Federende 31 anliegt, und zwei in Bezug auf den Mittelabschnitt 41 ungefähr rechtwinklig angeordneten Seitenabschnitten 42, 43 zusammen. Die Seitenabschnitte 42, 43 des Bügels 40 enthalten jeweils eine runde Öffnung 46, durch die der Bolzen 8 nahe seiner Bolzenenden mit wenig Spiel hindurchtritt.

Vorzugsweise ist der Abstand zwischen den beiden Seitenabschnitten 42, 43 dergestalt, dass sich der eine Seitenabschnitt 42 gegen den ersten gebogenen Längsabschnitt 55A, und sich der andere Seitenabschnitt 43 gegen den zweiten gebogenen Längsabschnitt 55B des Belagniederhalters 10 in Bolzenlängsrichtung abstützen kann.

Der Bolzen 8 dient als Befestigungsmittel, um den Bügel 40 an dem Lagerbock 25 lösbar zu befestigen. Zugleich stützt sich die Blattfeder 12 unter Federspannung an der dem Bolzen 8 zugewandten Innenseite 45 des Mittelabschnitts 41 des Bügels 40 ab. Die Summe dieser Maßnahmen führt zur Sicherung und Aufrechterhaltung der Biegespannung der Blattfeder 12.

Das formschlüssige Eingreifen des an dem Federende 31 ausgebildeten, abgewinkelten Formschlusselements 36 in die Öffnung 47 des Bügels 40, die sich in dem Mittelabschnitt 41 befindet, stellt eine zusätzliche Sicherungsmaßnahme dar.

Die Blattfeder 12 ist an dem Federende 31 schalenartig gebogen, wobei in montiertem Zustand die Außenseite dieser Biegung 37 dem Bolzen 8 zugewandt ist.

Das äußerste Ende des Federendes 31 kann auch als eine Verjüngung gestaltet sein, welche in montiertem Zustand das Formschlusselement zum Eingriff in die Öffnung 47 des Bügels 40 bildet. In diesem Fall ist die Blattfeder im Bereich der Verjüngung deutlich schmaler, als im Bereich der übrigen Blattfederbreite.

Die Montage der Anordnung aus Belagniederhalter 10, Blattfeder 12, Bügel 40 und Bolzen 8 erfolgt, indem zunächst die Blattfeder 12 so auf den Belagniederhalter 10 gelegt wird, dass sie mit ihrem ein Formschlusselement 39 bildenden, abgewinkelten Ende hinter das Ende des Belagniederhalters 10 greift. Sodann werden die so vorläufig verbundenen Teile in Längsrichtung in die Öffnung bzw. Ausnehmung 24 des Bremssattels hineingeschoben.

In einem nächsten Schritt wird der Bügel 40 auf das Federende 31 aufgesetzt, was durch das Eingreifen des als Formschlusselement 36 dienenden, abgewinkelten Endes in die Öffnung 47 des Bügels 40 vereinfacht wird und vor allem für den Monteur sicherer wird. Denn nun wird der Bügel 40 durch manuellen Druck auf seinen Mittelabschnitt 41 unter Biegen der Blattfeder niedergedrückt, bis die Öffnungen 46 in den Seitenabschnitten 42, 43 zu der Bohrung des bremssattelfesten Lagerbocks 25 fluchten. Ist dies der Fall, wird der Bolzen 8 in Bolzenlängsrichtung eingesetzt. Sodann kann die Druckausübung auf den Bügel 40 beendet werden, da nunmehr die Spannkraft der Blattfeder 12 durch den Bügel 40 in Verbindung mit dem Bolzen 8 sicher aufgenommen wird.

Damit sich der Bozen 8 nicht in Bolzenlängsrichtung wieder lösen kann, sind an dem Bolzen 8 geeignete Sicherungsringe, Splinte oder dergleichen vorgesehen.

### Bezugszeichenliste

- 1: Bremssattel
- 2: Bremsscheibe
- 3: Bremsbelag
- 4: Reibbelag
- 5: Belagrückenplatte
- 6: Belagschacht
- 7: Ausnehmung
- 8: Bolzen, Befestigungsmittel
- 10: Belagniederhalter
- 12: Blattfeder
- 15: Schräge
- 20: Ende
- 21: Federwiderlager
- 22: Federwiderlager
- 23: Stirnfläche
- 24: Öffnung, Ausnehmung
- 25: Lagerbock
- 27: Fläche am Bremssattel
- 30: Krümmung, Biegung
- 31: Federende
- 32: Federende
- 36: Formschlusselement
- 37: Biegung
- 39: Formschlusselement
- 40: Bügel, Befestigungsbügel
- 41: Mittelabschnitt
- 42: Seitenabschnitt
- 43: Seitenabschnitt
- 45: Innenseite
- 46: Öffnung
- 47: Öffnung
- 54: offener Mittelbereich
- 55A: Längsabschnitt
- 55B: Längsabschnitt
- 56A: Innenseite
- 56B: Innenseite
- 57: Querrand

## Patentansprüche

1. Scheibenbremse mit einem eine Bremsscheibe (2) sowie Bremsbeläge (3) zu beiden Seiten übergreifenden Bremssattel (1),
einem die Bremsbeläge (3) gegen ein Herausfallen aus der Scheibenbremse sichernden Belagniederhalter (10), der sich, gegen die Belagrückenplatten (5) beider Bremsbeläge (3) anliegend, quer zu diesen erstreckt, und
mit einer Blattfeder (12), die federelastisch gegen die den Bremsbelägen (3) abgewandte Seite des Belagniederhalters (10) anliegt, sich in dessen Längsrichtung erstreckt, und mit ihren beiden Federenden (31, 32) in Federwiderlagern (21, 22) abgestützt ist,
wobei Bestandteil eines der Federwiderlager ein Befestigungsmittel (8) ist, welches sich quer zu dem Belagniederhalter (10) und der Blattfeder (12) erstreckt,
**dadurch gekennzeichnet, dass**
weiterer Bestandteil des Federwiderlagers (21) ein Bügel (40) ist, der durch das Befestigungsmittel (8) mit dem Bremssattel (1) verbunden ist,
und gegen dessen dem Befestigungsmittel (8) zugewandte Innenseite (45) das Federende (31) anliegt.

2. Scheibenbremse nach Anspruch 1, **dadurch gekennzeichnet, dass** die Blattfeder (12) an dem Federende (31) mit einem Formschlusselement (36) zum Eingriff in den Bügel (40) versehen ist.

3. Scheibenbremse nach Anspruch 2, **dadurch gekennzeichnet, dass** sich das Formschlusselement (36) im Wesentlichen quer zu der Haupterstreckung der Blattfeder (12) erstreckt.

4. Scheibenbremse nach Anspruch 2 oder 3, **dadurch gekennzeichnet, dass** die Blattfeder (12) an dem Federende (31) mit einer Biegung (37) versehen ist, deren Biegungsaußenseite dem Befestigungsmittel (8) zugewandt ist.

5. Scheibenbremse nach einem der Ansprüche 1 bis 4, **dadurch gekennzeichnet, dass** die Blattfeder (12) an ihrem anderen Federende (32) mit einem Formschlusselement (39) versehen ist, mit dem die Blattfeder (12) den Belagniederhalter (10) in Längsrichtung hintergreift.

6. Scheibenbremse nach einem der vorangehenden Ansprüche, **dadurch gekennzeichnet, dass** die Blattfeder (12) nur an einem einzigen Ort ihrer Längserstreckung federelastisch gegen den Belagniederhalter (10) anliegt, wobei die Blattfeder (12) an diesem Ort eine Krümmung (30) aufweist und die Krümmungsaußenseite gegen den Belagniederhalter (10) anliegt.

7. Scheibenbremse nach einem der vorangehenden Ansprüche, **dadurch gekennzeichnet, dass** sich der Bügel (40) einstückig aus einem Mittelabschnitt (41), gegen den das Federende (31) anliegt, und gegenüber dem Mittelabschnitt (41) angewinkelten Seitenabschnitten (42, 43) zusammensetzt, durch die das Befestigungsmittel (8) hindurchführt.

8. Scheibenbremse nach Anspruch 7, **dadurch gekennzeichnet, dass** die Seitenabschnitte (42, 43) jeweils eine Öffnung (46) aufweisen, durch die das Befestigungsmittel (8) hindurchführt.

9. Scheibenbremse nach Anspruch 7 oder 8, **dadurch gekennzeichnet, dass** der Mittelabschnitt (41) eine Öffnung (47) aufweist, in die ein Formschlusselement (36) eingreift, mit dem das Federende (31) abschließt.

10. Scheibenbremse nach einem der vorangehenden Ansprüche, **dadurch gekennzeichnet, dass** der Belagniederhalter (10) im Bereich des Federwiderlagers (21) zwei durch einen offenen Mittelbereich (54) voneinander getrennte Längsabschnitte (55A, 55B) aufweist, deren Innenseiten (56A, 56B) einander und einem Lagerbock (25) zugewandt sind, welcher an dem Bremssattel (1) angeformt ist und an welchem das Befestigungsmittel (8) lösbar befestigt ist.

11. Scheibenbremse nach Anspruch 10, **dadurch gekennzeichnet, dass** der Bügel (40) gegen die einander abgewandten Außenseiten der Längsabschnitte (55A, 55B) abgestützt ist.

12. Scheibenbreme nach einem der vorangehenden Ansprüche, **dadurch gekennzeichnet, dass** das Befestigungsmittel (8) ein Bolzen ist.

13. Blattfeder (12) und Bügel (40) einer Niederhalteranordnung für die Bremsbeläge einer Scheibenbremse,
mit einem auf einem Mittelabschnitt der Blattfeder angeordneten Anlageort (35) in Gestalt einer Biegung oder Krümmung der Blattfeder mit Krümmungsaußenseite zu den Bremsbelägen hin,
**dadurch gekennzeichnet, dass**
die Blattfeder (12) an ihrem einen Federende (31) mit einem sich im Wesentlichen quer zur Haupterstreckung der Blattfeder (12) erstreckenden Formschlusselement (36) zum Eingriff in eine schlitzförmige Öffnung (47) des Bügels (40) versehen ist.

14. Blattfeder (12) und Bügel (40) nach Anspruch 13, **dadurch gekennzeichnet, dass** die Blattfeder (12) an dem Federende (31) mit einer Biegung (37) versehen ist, deren Biegungsaußenseite sich auf derselben Hauptseite der Blattfeder (12) befindet, wie die Krümmungsaußenseite an dem Anlageort (35).

15. Blattfeder (12) und Bügel (40) nach Anspruch 13 oder 14, **dadurch gekennzeichnet, dass** die Blattfeder (12) auch an ihrem anderen Federende (32) mit einem sich im Wesentlichen quer zur Haupterstreckung der Blattfeder (12) erstreckenden Formschlusselement (39) versehen ist, wobei sich die beiden Formschlusselemente (36, 39) bezüglich der beiden Hauptseiten der Blattfeder (12) in entgegengesetzte Richtungen erstrecken.

16. Befestigungsbügel (40) für eine einen Belagniederhalter (10) und eine Blattfeder(12) und einen Bügel (40) nach einem der Ansprüche 13-15 umfassende Niederhalteranordnung, der sich einstückig aus einem Mittelabschnitt (41) und gegenüber dem Mittelabschnitt (41) angewinkelten Seitenabschnitten (42, 43) zusammensetzt, wobei die Seitenabschnitte (42, 43) zueinander fluchtende Öffnungen (46) zum Hindurchführen eines Befestigungsmittels aufweisen.

17. Befestigungsbügel (40) nach Anspruch 16, **dadurch gekennzeichnet, dass** der Mittelabschnitt (41) die Öffnung (47) in Form eines Schlitzes mit Erstreckung zu den Seitenabschnitten (42, 43) hin aufweist.

18. Befestigungsbügel (40) nach Anspruch 16 oder 17, **dadurch gekennzeichnet, dass** die Seitenabschnitte (42, 43) rechtwinklig zu dem Mittelabschnitt (41) angeordnet sind.

## Claims

1. Disk brake comprising a brake caliper (1) which extends over a brake disk (2) and brake pads (3) on both sides of the brake disk, a pad hold-down member (10) which secures the brake pads (3) against falling out of the disk brake and which, resting against the pad rear plates (5) of both brake pads (3), extends transversely thereto, and comprising a leaf spring (12), which rests resiliently against the side of the pad hold-down member (10) facing away from the brake pads (3), extends in the longitudinal direction of said member, and is supported in spring abutments (21, 22) by the two spring ends (31, 32) thereof, a component of one of the spring abutments being a fastening means (8) which extends transversely to the pad hold-down member (10) and the leaf spring (12), **characterized in that** a further component of the spring abutment (21) is a bracket (40), which is connected to the brake caliper (1) by the fastening means (8), and of which inner side (45) facing the fastening means (8) the spring ends (31) rest against.

2. Disk brake according to claim 1, **characterized in that** the leaf spring (12) is provided at the spring end (31) with a form-fitting element (36) for engagement in the bracket (40).

3. Disk brake according to claim 2, **characterized in that** the form-fitting element (36) extends substantially transversely to the main extension of the leaf spring (12).

4. Disk brake according to claim 2 or claim 3, **characterized in that** the leaf spring (12) is provided at the spring end (31) with a bend (37), the outer side of which bend the fastening means (8) faces.

5. Disk brake according to any of claims 1 to 4, **characterized in that** the leaf spring (12) is provided at its other spring end (32) with a form-fitting element (39) by means of which the leaf spring (12) engages behind the pad hold-down member (10) in the longitudinal direction.

6. Disk brake according to any of the preceding claims, **characterized in that** the leaf spring (12) rests resiliently against the pad hold-down member (10) only at a single location of its longitudinal extension, the leaf spring (12) having a curvature (30) at this location and the curvature outer side resting against the pad hold-down member (10).

7. Disk brake according to any of the preceding claims, **characterized in that** the bracket (40) is composed in one piece of a central portion (41) against which the spring end (31) rests, and of side portions (42, 43) which are angled relative to the central portion (41) and through which the fastening means (8) passes.

8. Disk brake according to claim 7, **characterized in that** the side portions (42, 43) each have an opening (46) through which the fastening means (8) passes.

9. Disk brake according to claim 7 or claim 8, **characterized in that** the central portion (41) has an opening (47) into which a form-fitting element (36) terminating with the spring end (31) engages.

10. Disk brake according to any of the preceding claims, **characterized in that,** in the region of the spring abutment (21), the pad hold-down member (10) has two longitudinal portions (55A, 55B) which are separated from one another by an open central region (54), the inner sides (56A, 56B) of which portions face one another and a bearing block (25) which is integrally formed on the brake caliper (1) and on which the fastening means (8) is releasably fastened.

11. Disk brake according to claim 10, **characterized in that** the bracket (40) is supported against the outer sides of the longitudinal portions (55A, 55B) facing away from one another.

12. Disk brake according to any of the preceding claims, **characterized in that** the fastening means (8) is a bolt.

13. Leaf spring (12) and bracket (40) of a hold-down assembly for the brake pads of a disk brake, comprising a contact location (35) arranged on a central portion of the leaf spring and in the form of a bend or curvature of the leaf spring with the curvature outer side toward the brake pads, **characterized in that** the leaf spring (12) is provided at its one spring end (31) with a form-fitting element (36) which extends substantially transversely to the main extension of the leaf spring (12) for engaging in a slot-shaped opening (47) of the bracket (40).

14. Leaf spring (12) and bracket (40) according to claim 13, **characterized in that** the leaf spring (12) is provided at the spring end (31) with a bend (37), the outer side of which bend is located on the same main side of the leaf spring (12) as the curvature outer side at the contact location (35).

15. Leaf spring (12) and bracket (40) according to claim 13 or claim 14, **characterized in that** the leaf spring (12) is also provided at its other spring end (32) with a form-fitting element (39) which extends substantially transversely to the main extension of the leaf spring (12), the two form-fitting elements (36, 39) extending in opposite directions with respect to the two main sides of the leaf spring (12).

16. Mounting bracket (40) for a hold-down assembly comprising a pad hold-down member (10) and a leaf spring (12) and a bracket (40) according to any of claims 13-15, which bracket is composed in one piece of a central portion (41) and side portions (42, 43) which are angled relative to the central portion (41), wherein the side portions (42, 43) have openings (46), which are aligned with respect to one another, for passing through a fastening means.

17. Mounting bracket (40) according to claim 16, **characterized in that** the central portion (41) has the opening (47) in the form of a slot extending toward the side portions (42, 43).

18. Mounting bracket (40) according to claim 16 or claim 17, **characterized in that** the side portions (42, 43) are arranged at right angles to the central portion (41).

## Revendications

1. Frein à disque avec un étrier de frein (1) venant se plaquer au-dessus d'un disque de frein (2) ainsi que de garnitures de frein (3) des deux côtés du disque de frein, un élément de retenue de garniture (10) empêchant les garnitures de frein (3) de tomber du frein à disque, qui s'étend, de manière à s'appliquer contre les porte-garnitures (5) des deux garnitures de frein (3), transversalement par rapport à ceux-ci, et avec un ressort à lames (12), qui s'applique de manière élastique contre la face de l'élément de retenue de garniture (10) opposée aux garnitures de frein (3), s'étend dans la direction longitudinale de celui-ci, et est en appui avec ses deux extrémités de ressort (31, 32) dans des butées de ressort (21, 22), dans lequel un moyen de fixation (8), lequel s'étend transversalement par rapport à l'élément de retenue de garniture (10) et au ressort à lames (12), fait partie d'une des butées de ressort, **caractérisé en ce qu'**un étrier (40), qui est relié à l'étrier de frein (1) par le moyen de fixation (8), et contre la face intérieure (45) duquel, tournée vers le moyen de fixation (8), s'applique l'extrémité de ressort (31), fait également partie de la butée de ressort (21).

2. Frein à disque selon la revendication 1, **caractérisé en ce que** le ressort à lames (12) est pourvu à l'extrémité de ressort (31) d'un élément de liaison par complémentarité de formes (36) à insérer dans l'étrier (40).

3. Frein à disque selon la revendication 2, **caractérisé en ce que** l'élément de liaison par complémentarité de formes (36) s'étend sensiblement transversalement par rapport à l'étendue principale du ressort à lames (12).

4. Frein à disque selon la revendication 2 ou 3, **caractérisé en ce que** le ressort à lames (12) est pourvu à l'extrémité de ressort (31) d'une courbure (37), dont la face extérieure de courbure est tournée vers le moyen de fixation (8).

5. Frein à disque selon l'une quelconque des revendications 1 à 4, **caractérisé en ce que** le ressort à lames (12) est pourvu à son autre extrémité de ressort (32) d'un élément de liaison par complémentarité de formes (39), avec lequel le ressort à lames (12) vient se plaquer derrière l'élément de retenue de garniture (10) dans la direction longitudinale.

6. Frein à disque selon l'une quelconque des revendications précédentes, **caractérisé en ce que** le ressort à lames (12) s'applique uniquement à un seul endroit de son étendue longitudinale de manière élastique contre l'élément de retenue de garniture (10), dans lequel le ressort à lames (12) présente à cet endroit une courbe (30) et la face extérieure de courbe s'applique contre l'élément de retenue de garniture (10).

7. Frein à disque selon l'une quelconque des revendications précédentes, **caractérisé en ce que** l'étrier (40) se compose d'une seule pièce d'une section centrale (41), contre laquelle l'extrémité de ressort (31) s'applique, et de sections latérales (42, 43) inclinées par rapport à la section centrale (41), à travers lesquelles le moyen de fixation (8) passe.

8. Frein à disque selon la revendication 7, **caractérisé en ce que** les sections latérales (42, 43) présentent respectivement une ouverture (46), à travers laquelle le moyen de fixation (8) passe.

9. Frein à disque selon la revendication 7 ou 8, **caractérisé en ce que** la section centrale (41) présente une ouverture (47), dans laquelle s'insère un élément de liaison par complémentarité de formes (36), par lequel l'extrémité de ressort (31) se termine.

10. Frein à disque selon l'une quelconque des revendications précédentes, **caractérisé en ce que** l'élément de retenue de garniture (10) présente dans la zone de la butée de ressort (21) deux sections longitudinales (55A, 55B) séparées l'une de l'autre par une zone centrale (54) ouverte, dont les faces intérieures (56A, 56B) sont tournées l'une vers l'autre et vers un support de palier (25), lequel est formé sur l'étrier de frein (1) et sur lequel le moyen de fixation (8) est fixé de manière détachable.

11. Frein à disque selon la revendication 10, **caractérisé en ce que** l'étrier (40) est en appui contre les faces extérieures opposées les unes aux autres des sections longitudinales (55A, 55B).

12. Frein à disque selon l'une quelconque des revendications précédentes, **caractérisé en ce que** le moyen de fixation (8) est un boulon.

13. Ressort à lames (12) et étrier (40) d'un ensemble de retenue pour les garnitures de frein d'un frein à disque, avec un emplacement d'appui (35) disposé sur une section centrale du ressort à lames sous la forme d'une courbure ou courbe du ressort à lames avec une face extérieure de courbe en direction des garnitures de frein, **caractérisé en ce que** le ressort à lames (12) est pourvu à l'une de ses extrémités de ressort (31) d'un élément de liaison par complémentarité de formes (36) s'étendant sensiblement transversalement par rapport à l'étendue principale du ressort à lames (12) pour s'engager dans une ouverture en forme de fente (47) de l'étrier (40).

14. Ressort à lames (12) et étrier (40) selon la revendication 13, **caractérisé en ce que** la ressort à lames (12) est pourvu à l'extrémité de ressort (31) d'une courbure (37), dont la face extérieure de courbure se trouve sur la même face principale du ressort à lames (12) que la face extérieure de courbe sur l'emplacement d'appui (35).

15. Ressort à lames (12) et étrier (40) selon la revendication 13 ou 14, **caractérisé en ce que** la ressort à lames (12) est également pourvu à son autre extrémité de ressort (32) d'un élément de liaison par complémentarité de formes (39) s'étendant sensiblement transversalement par rapport à l'étendue principale du ressort à lames (12), dans lequel les deux éléments de liaison par complémentarité de formes (36, 39) s'étendent dans des directions opposées par rapport aux deux faces principales du ressort à lames (12).

16. Etrier de fixation (40) pour un ensemble de retenue comprenant un élément de retenue de garniture (10) et un ressort à lames (12) et un étrier (40) selon l'une quelconque des revendications 13-15, qui se compose d'une seule pièce d'une section centrale (41) et de sections latérales (42, 43) inclinées par rapport à la section centrale (41), dans lequel les sections latérales (42, 43) présentent des ouvertures (46) en alignement les unes avec les autres pour faire passer un moyen de fixation.

17. Etrier de fixation (40) selon la revendication 16, **caractérisé en ce que** la section centrale (41) présente la ouverture (47) sous forme d'une fente avec une étendue en direction des sections latérales (42, 43).

18. Etrier de fixation (40) selon la revendication 16 ou 17, **caractérisé en ce que** les sections latérales (42, 43) sont disposées à angle droit par rapport à la section centrale (41).
